## Europäisches Patentamt
## European Patent Office
## Office européen des brevets

(19)

(11) Numéro de publication: **0 132 427 B1**

(12) **FASCICULE DE BREVET EUROPEEN**

(45) Date de publication du fascicule du brevet:
**07.01.87**

(51) Int. Cl.⁴: **H 02 K 3/51,** H 02 K 7/116

(21) Numéro de dépôt: **84401288.0**

(22) Date de dépôt: **21.06.84**

(54) **Rotor de petit moteur électrique.**

(30) Priorité: **21.07.83 FR 8312054**

(43) Date de publication de la demande:
**30.01.85 Bulletin 85/5**

(45) Mention de la délivrance du brevet:
**07.01.87 Bulletin 87/2**

(84) Etats contractants désignés:
**DE GB IT**

(56) Documents cités:
**FR - A - 1 600 829**
**FR - A - 2 396 149**
**FR - A - 2 449 354**
**US - A - 2 315 300**

**PATENTS ABSTRACTS OF JAPAN, vol. 6, no.**
**170(E-128)(1048), 3 septembre 1982;**

(73) Titulaire: **DUCELLIER & Cie, Echat 950, F-94024 Créteil Cedex (FR)**

(72) Inventeur: **Savelli, Francis, 8 rue des Pavillons Fleuris, F-94500 Champigny (FR)**

(74) Mandataire: **Habert, Roger, VALEO Service Propriété Industrielle 21 rue Auguste Blanqui, F-93406 Saint-Ouen (FR)**

## Description

L'invention concerne un rotor de petit moteur électrique notamment pour moto-réducteur à application automobile tel que lève-vitre, du type comportant sur un arbre, un induit, un collecteur de courant et, obtenue de matière, une vis sans fin.

Pour de tels rotors il est nécessaire d'utiliser des arbres de diamètre suffisant afin de pouvoir réaliser la vis sans fin de matière et d'obtenir une bonne linéarité de l'arbre pendant le fonctionnement du moto-réducteur. Or lors du bobinage de l'induit le trajet des spires de fond d'encoche de l'induit lors de leur passage d'une encoche à l'autre épouse l'extérieur de l'arbre dont le diamètre est supérieur à la ligne virtuelle reliant le fond de deux encoches recevant la même spire du bobinage, de ce fait l'encombrement du bobinage de part et d'autre de l'induit augmente plus vite que le remplissage des encoches, ce remplissage étant alors limité ainsi que la performance du moto-réducteur pour un encombrement donné.

La présente invention a pour but de remédier à ces inconvénients et concerne à cet effet un rotor de petit moteur électrique notamment pour moto-réducteur à application automobile tel que lève-vitre, du type comportant sur un arbre: un induit composé d'un paquetage de tôles à encoches dans lesquelles sont bobinés des conducteurs électriques, un collecteur de courant et, obtenue de matière, une vis sans fin, rotor caractérisé en ce que des gorges sont réalisées sur l'arbre de part et d'autre de l'induit suivant une profondeur définie par le trajet sensiblement rectiligne des conducteurs électriques lors de leur passage d'une encoche à l'autre non consécutive pendant le bobinage des fonds d'encoches.

La description qui va suivre en regard des figures annexées fera mieux comprendre comment l'invention peut être réalisée.

La figure 1 représente longitudinalement un rotor conforme à l'invention.

La figure 2 représente un rotor conforme à l'invention selon la coupe II-II de la figure 1.

De façon connue le rotor est constitué d'un arbre 1 qui d'une part porte un induit 2 formé par un paquetage de tôles 7 à encoches 8 et 9 dans lesquelles sont réalisés des bobinages dont les extrémités sont reliées à un collecteur 3 porté par l'arbre 1, et d'autre part comporte une vis sans fin 4 réalisée de matière.

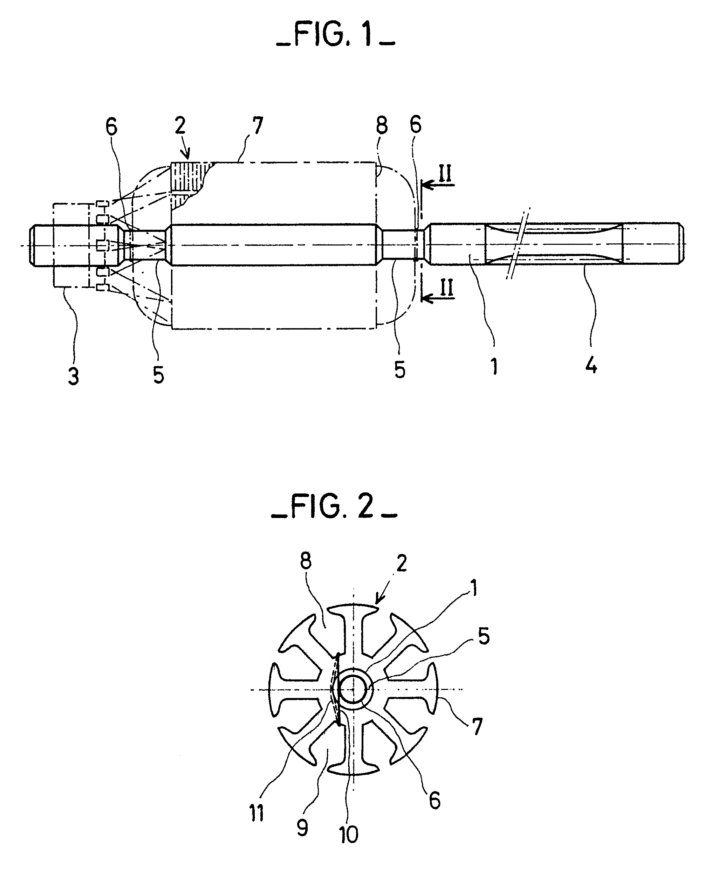

Les bobinages étant effectués par le passage du fil conducteur d'une encoche 8 vers une encoche 9, tel que représenté à la figure 2, le trajet des spires des fonds d'encoche lors dudit passage forme une courbe 11 en tangentant l'extérieur de l'arbre 1, le diamètre de celui-ci étant choisi suffisamment important de façon d'une part à autoriser la réalisation de matière de la vis sans fin 4, et d'autre part d'avoir une bonne résistance à la flexion dudit arbre 1, de ce fait l'encombrement des bobinages de part et d'autre du paquetage de tôles 7 devient vite important et ne permet pas d'effectuer un remplissage correct des encoches 8 et 9.

Conformément à l'invention des gorges 5 sont réalisées dans l'arbre 1 de part et d'autre du paquetage 7, la profondeur de ces gorges 5 est définie de façon à ce que le passage 10 du conducteur de fond d'encoche, de l'encoche 8 à l'encoche 9 soit rectiligne ce qui permet de gagner sur l'encombrement une épaisseur correspondante à la différence des deux diamètres arbre et gorge, et conséquemment d'augmenter le nombre de spires dans lesdites encoches sans augmenter l'encombrement des passages d'une encoche à l'autre. L'ensemble induit étant ensuite imprégné d'un isolant 6 du type résine époxy.

Un tel rotor permet alors de réaliser un moteur plus performant sans changer son encombrement.

## Revendication

1. Rotor de petit moteur électrique notamment pour moto-réducteur à application automobile tel que lève-vitre, du type comportant sur un arbre (1): un induit (2) composé d'un paquetage de tôles à encoches dans lesquelles sont bobinés des conducteurs électriques, un collecteur de courant (3) et, obtenue de matière, une vis sans fin (4), rotor caractérisé en ce que des gorges (5) sont réalisées sur l'arbre (1) de part et d'autre de l'induit (2) suivant une profondeur définie par le trajet sensiblement rectiligne des conducteurs électriques lors de leur passage d'une encoche à l'autre non consécutive pendant le bobinage des fonds d'encoches.

## Patentanspruch

1. Rotor für einen elektrischen Kleinmotor, insbesondere einen Getriebemotor zur Verwendung bei Kraftfahrzeugen, z.B. als Scheibenhebermotor, mit einer Welle (1), einem Anker (2) aus einem Paket mit Nuten versehenen Blechen, in deren Nuten elektrische Leiter gewickelt sind, einem Stromabnehmer (3) und einer einstückigen Schnecke (4), dadurch gekennzeichnet, dass beiderseits des Ankers (2) in die Welle (1) Umfangsnuten (5) mit einer Tiefe eingearbeitet sind, die durch den ungefähr geradlinigen Verlauf der elektrischen Leiter zwischen zwei nicht aufeinanderfolgenden Nuten beim Bewickeln der Nutgrundflächen bestimmt ist.

## Claim

1. Rotor of a small electric motor, in particular for a geared motor used in a motor vehicle, such as a window lifter, of the type comprising, on a shaft (1); an armature (2) composed of a stack of metal sheets with notches, in which electrical conductors are wound, a current collector (3) and, produced integrally, an endless screw (4), the rotor being characterised in that grooves (5) are made in the shaft (1) on either side of the armature (2) to a depth defined by the substantially rectilinear path of the electrical conductors in their passage from one notch to another non-consecutive notch during the winding of the notch bottoms.

0 132 427

_FIG. 1_

_FIG. 2_

3